# EUROPEAN PATENT SPECIFICATION

(11) **EP 3 795 990 B1**
(45) Date of publication and mention of the grant of the patent: **07.06.2023**
(21) Application number: 19306167.8
(22) Date of filing: 23.09.2019
(51) Int. Cl.: G01N 27/414

(54) **ORGANIC ELECTROCHEMICAL TRANSISTOR BASED SENSOR**
AUF ORGANISCHEM ELEKTROCHEMISCHEM TRANSISTOR BASIERENDER SENSOR
CAPTEUR BASÉ SUR UN TRANSISTOR ÉLECTROCHIMIQUE ORGANIQUE

(43) Date of publication of application: 24.03.2021
(73) Proprietor: Valotec, 94800 Villejuif (FR)
(72) Inventor: CAPITAO, Dany, 94800 Villejuif (FR); MAURIN, Antoine, 94800 Villejuif (FR); ABREU, Caroline, 94800 Villejuif (FR); MATTANA, Giorgio, 75205 Paris Cedex 13 (FR)
(74) Representative: Icosa

(56) References cited:
- WO-A1-2018/207220
- US-A1- 2016 169 835
- US-B2- 9 874 541
- XENOFON STRAKOSAS ET AL: "Catalytically enhanced organic transistors for in vitro toxicology monitoring through hydrogel entrapment of enzymes", JOURNAL OF APPLIED POLYMER SCIENCE, vol. 134, no. 7, 13 October 2016 (2016-10-13), XP055665876, US ISSN: 0021-8995, DOI: 10.1002/app.44483
- PAPPA ANNA-MARIA ET AL: "Organic Electronics for Point-of-Care Metabolite Monitoring", TRENDS IN BIOTECHNOLOGY, vol. 36, no. 1, 1 January 2018 (2018-01-01), pages 45-59, XP085320136, ISSN: 0167-7799, DOI: 10.1016/J.TIBTECH.2017.10.022
- ANZAI JUN-ICHI ED - HARRISON BENJAMIN S ET AL: "Recent progress in electrochemical biosensors based on phenylboronic acid and derivatives", MATERIALS SCIENCE AND ENGINEERING C, ELSEVIER SCIENCE S.A, CH, vol. 67, 19 May 2016 (2016-05-19), pages 737-746, XP029579430, ISSN: 0928-4931, DOI: 10.1016/J.MSEC.2016.05.079

## Description

### FIELD OF INVENTION

The present invention relates to the field of organic electrochemical transistor-based sensors (OECT sensor). In particular, the present invention relates to the field of sensors for biologic analytes.

### BACKGROUND OF INVENTION

Organic electrochemical transistors (OECT) have been extensively studied for the applications of sensors due to their low operating voltages, simple structure and ability to operate in aqueous environments. These features are essential for biological applications. OECTs based on several different conducting polymers have been developed for chemical and biological sensing, including humidity sensors, pH and ion sensors, biologic analyte sensors such as glucose sensor, lactose sensor, cholesterol sensor, uric acid sensor, tyrosine sensor, ascorbic acid sensor, dopamine sensor, adrenaline sensor, gallic and sialic acid sensor and cell-based biosensors.

OECT sensors are used for detection, i.e. a qualitative response to a condition, as well as measure of concentration of an analyte, i.e. for quantitative measurement. For instance, highly sensitive glucose sensor is useful in the monitoring of diabetes. OECT glucose sensors has been reported in US2012/0247976: they consist in an OECT structure whose gate is modified with a layer of Glucose Oxidase and chitosan polymer. However, such device does not detect high concentrations of glucose (e.g. hyperglycemic values) and is not suitable for *in-vivo* use.

Xenofon Strakokas et Al. in "Catalytically enhanced organic transistors for in-vitro toxicology monitoring through hydrogel entrapment of enzymes", J. Appl. Polym. Sci. 2017, 134(7), [44483] DOI:10.1002/APP.44483, discloses an OECT comprising a substrate of PEDOT:PSS:PVA organic conducting polymer covered with a layer of Gold. Functionalized platinum nanoparticles are electrodeposited on said substrate. Then, a hydrogel comprising enzyme is deposited enabling glucose monitoring for in vitro studies.

Pappa Anna-Maria et Al. in "Organic Electronics for Point-of-Care Metabolite Monitoring", Trends in Biotechnology, Volume 36, Issue 1, January 2018, Pages 45-59, DOI:10.1016/j.tibtech.2017.10.022 makes a review of almost 100 references dealing with organic electronics for point of care metabolite monitoring.

Jun-Ichi Anzai, in "Recent progress in electrochemical biosensors based on phenylboronic acid and derivatives", Materials Science and Engineering: C, Volume 67, 1 October 2016, Pages 737-746, DOI: 10.1016/j.msec.2016.05.079 makes a review of almost 125 references in which phenylboronic acid is used in biosensing thanks to complexing properties with diols.

International patent application WO2018/207220 discloses a field effect transistor made of PEDOT:PSS and Ag/AgX nanoparticles which are deposited on the surface of PEDOT:PSS. Nanoparticles behave as an electrochemical couple, sensitive to halide concentration in electrolyte.

US patent application US2016/169835 discloses a biosensor in which phenylboronic acid is used on a gold electrode.

OECT sensors with improved performances are thus desirable, especially for real-time monitoring concentration of biologic analytes, and in particular for *in-vivo* monitoring.

It is therefore an object of the present invention to provide an OECT sensor with high sensibility and robustness, and/or with a wide range of measurement of concentration adapted to *in vivo* detection.

### SUMMARY

The present invention relates to an organic electrochemical transistor comprising source and drain connected by a conductive channel, a gate electrode, a catalytic layer and a biologic detection layer, wherein the catalytic layer is a composite material comprising noble metal nanoparticles and an organic conductive matrix.

The organic electrochemical transistor is defined in claim 1.

Preferably the conductive polymer
of the catalytic layer is selected from polythiophene derivatives, polypyrrole, polyaniline, carbon nanotubes, graphene and carbon powder, more preferably conductive matrix of the catalytic layer is poly(3,4-ethylenedioxythiophene) polystyrene sulfonate (PEDOT:PSS).

In an embodiment, the biologic detection layer is a composite material comprising a biologic recognition element and an organic matrix. In particular, the organic matrix of the biologic detection layer is selected from a polymer and an allotrope of carbon, preferably organic matrix of the biologic detection layer is selected from polysaccharides derivatives such as chitosan derivatives or cellulose acetate derivatives, polyvinylpyridine derivatives, carbon nanotubes, graphene and carbon powder, more preferably organic matrix of the biologic detection layer is a chitosan derivative.

In an embodiment, the biologic recognition element is an enzyme, preferably Glucose oxidase or Lactate oxidase.

In a specific configuration, the organic electrochemical transistor comprises:
i. a substrate (1), preferably a polymeric substrate, more preferably a polyimide polymeric substrate,
ii. a source electrode (2) and a drain electrode (3), preferably source electrode (2) and drain electrode (3) are gold electrodes,
iii. a channel (4) connecting source electrode (2) and drain electrode (3), preferably channel (4) is a conductive polymer, more preferably channel (4) is poly(3,4-ethylenedioxythiophene) polystyrene sulfonate polymer (PEDOT:PSS),
iv. a gate electrode (5) located near the channel (4), preferably gate electrode (5) is a gold electrode,
v. a catalytic layer (6) in direct contact with the gate electrode (5) and comprising noble metal nanoparticles (7), preferably platinum nanoparticles grafted with thiophenol derivatives of formula (I) and an organic conductive matrix (8), preferably an organic conductive polymer, more preferably poly(3,4-ethylenedioxythiophene) polystyrene sulfonate polymer (PEDOT:PSS), 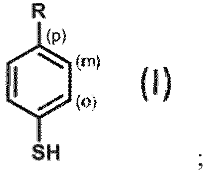 and
vi. a biologic detection layer (9) in direct contact with the catalytic layer (6) and comprising a biologic recognition element, preferably an enzyme, more preferably Glucose Oxidase and an organic matrix, preferably a derivative of chitosan.

In an embodiment, the organic electrochemical transistor is totally or partially encapsulated in a membrane.

The present invention also relates to a method for detection of a biological analyte wherein a biological fluid is contacted with an organic electrochemical transistor as described above.

### DEFINITIONS

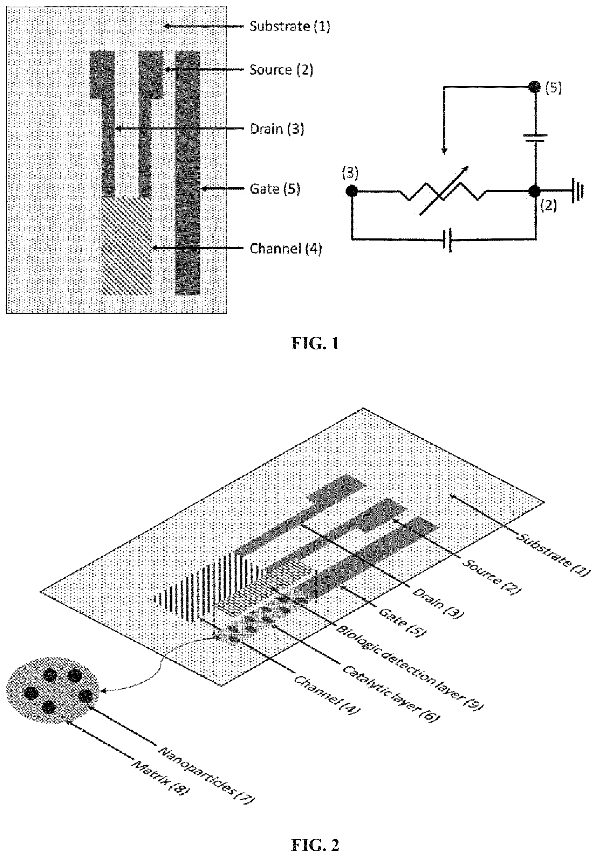

In the present invention, the following terms have the following meanings:
- **"About"** when placed before a figure, means plus or minus 10% of the figure.
- **"Drain"** or **"Drain electrode":** refers to one of the three electrodes of an OECT as defined below.
- **"Gate"** or **"Gate electrode":** refers to one of the three electrodes of an OECT as defined below.
- **"Noble metal":** refers to the following metals: Platinum (Pt), God (Au), Silver (Ag) and Copper (Cu).
- **"Nanoparticle"** refers to a particle of any shape having at least one dimension in the nanometer scale, for instance having at least one dimension ranging from 0.1 nanometer to 1000 nanometers.
- **"Organic electrochemical transistor"** or **"OECT":** refers to a device comprising three electrodes: (2S) the source or source electrode, (2D) the drain or drain electrode, and (2G) the gate or gate electrode. In an OECT, the source and drain electrodes are connected by a conductive polymer which acts as a channel (3); and the channel and the gate electrode are separated by an electrolyte (4) which acts as gate dielectric. State of the art OECT structure is displayed in Figure 1.
- **"Polythiophenes":** refers to a macromolecular chain having a thiophene as repeating unit, thiophene being a sulfur heterocycle. More precisely, the term "polythiophenes" refers to macromolecular chains resulting from the polymerization of thiophene and/or of its derivatives such as substituted thiophene (for example, alkylthiophenes, halogenated thiophenes, poly(ethylenedioxythiophene) (PEDOT)).
- **"Source"** or **"Source electrode":** refers to one of the three electrodes of an OECT as defined above.

### DETAILED DESCRIPTION

The following detailed description will be better understood when read in conjunction with the drawings. For the purpose of illustrating, the OECT is shown in the preferred embodiments.

This invention relates to an organic electrochemical transistor (OECT) comprising source and drain connected by a conductive channel, a gate electrode, a catalytic layer and a biologic detection layer, wherein the catalytic layer is a composite material comprising noble metal nanoparticles and an organic conductive matrix.

Noble metal nanoparticles behave as catalytic sites and need to be accessible. However, nanoparticles are usually dispersible in aqueous solutions: they may detach from OECT leading to loss of sensibility or even failure of the device.

Noble metal nanoparticles are preferably spherical, with diameter in a range from 0.1 nm to 200 nm. According to an embodiment, noble metal nanoparticles diameter is about 1, 2, 3, 5, 7, 10, 12, 15, 20, 25, 30, 35, 40, 50, 60, 70, 85, 100, 125, 150, 175 or 200 nm. In the invention, nanoparticles are included in an organic matrix, forming a composite material. Consequently, nanoparticles are bound to the composite material by intermolecular interactions (i.e. Van der Walls and electrostatic interactions) and/or geometrical constraints, and nanoparticle release is avoided.

In addition, matrix allows building a catalytic layer with large dimensions, at least with a thickness much larger than a layer of nanoparticles. Such thick material presents an increased contact surface for nanoparticles with sample under study, and allow to engage more nanoparticles in the device. An improved sensibility is obtained.

In an embodiment, noble metal nanoparticles are present only in catalytic layers. In other words, electrodes (source, drain and gate) and channel of OECT do not contain noble metal nanoparticles. Indeed, if noble metal nanoparticles are inside electrodes or channel, oxidation may occur in the electrode or channel material, leading to noisy signal.

According to the invention, the catalytic layer is in direct contact with gate electrode of OECT and may be on a part of the gate electrode, i.e. catalytic layer may not cover the whole surface of gate electrode. Direct contact of the catalytic layer and the gate electrode of OECT limits noise and artefacts in signal.

In a preferred embodiment, electrodes are metallic, especially gold (Au), Silver (Ag) or platinum (Pt); or conductive allotrope of carbon, especially graphene, carbon nanotubes or pure carbon particles. Electrodes are on a substrate which may be selected from various polymers, glass or semi-conductor materials. Electrodes may be deposited by inkjetting, vacuum deposition, spin coating, spray coating or any other deposition technique. According to an embodiment, noble metal nanoparticles are platinum nanoparticles. Platinum nanoparticles are indeed very efficient in oxydo-reduction processes, hence enabling electron transfer from an analyte to be detected into OECT.

According to the invention noble metal nanoparticles are grafted with thiophenol derivatives of formula (I):

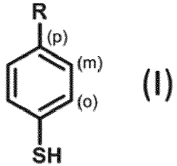

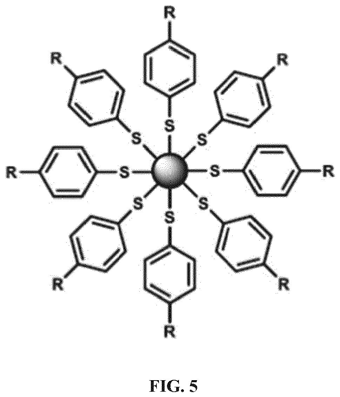

By grafted, it is meant that a bond is created between the noble metal nanoparticle and the thiophenol derivative: nanoparticle-S-C6H4-R. Figure 5 shows a grafted nanoparticle. Thiophenol may be functionalized by R moiety in *ortho-, meta-* or *para-* positions. *Ortho-*position is less preferred for steric reasons: building Sulphur covalent bound is difficult if R moiety is bulky. Therefore, *meta-* and *para-* positions are preferred, especially *para-*position which allows for a denser grafting.

By grafting, nanoparticle surface is functionalized by moiety R and compatibility with other materials is improved.

In particular, with charged R moieties, nanoparticles are easily dispersed in a charged material via electrostatic interactions. In addition, surface of such nanoparticles is easily accessible in aqueous medium. Charged R moiety may be selected from charged ternary amine, quaternary amine, sulfonate and phosphonate. Particularly suitable thiophenol derivative are 4- trimethylammonium thiophenol (IIa), 4-mercaptobenzenesulfonic acid (IIb),
N-4-thiophenol- (2, 5 diamino) propenamide (IIc) and, 4-mercaptobenzenephosphonic acid (IId).

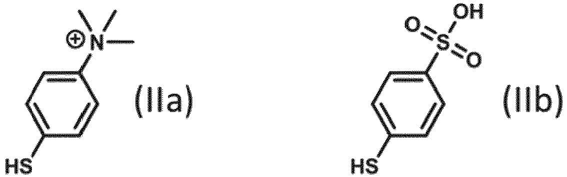

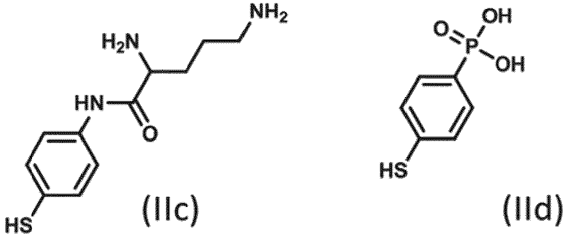

For instance, platinum nanoparticles functionalized with charged moieties are easily dispersed in PEDOT:PSS conductive polymer, yielding a very suitable composite material for invention.

Alternatively, with aromatic R moieties, nanoparticles are easily dispersed in aromatic materials via Π-Π interactions. In addition, surface of such nanoparticles is easily accessible in organic medium. Aromatic R moiety may be selected from N-(4-mercaptophenyl)pyrene-1-carboxamide (IIIa) (also known as N-4-thiophenol-pyrene-1-carboxamide) and 4-(tritylamino)benzenethiol (IIIb) (also known as 4-(1-[(triphenylmethyl)amino]) thiophenol).

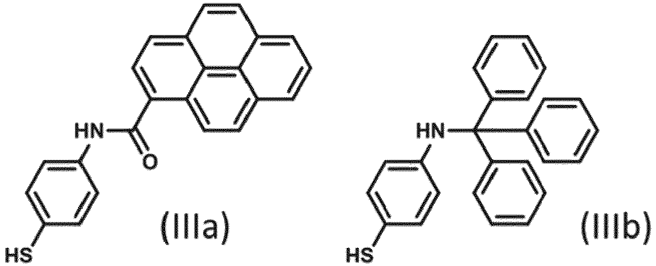

For instance, platinum nanoparticles functionalized with aromatic moieties are easily dispersed in aromatic conductive polymer, yielding a very suitable composite material for the invention.

According to to the invention the organic conductive matrix of the catalytic layer is selected from a conductive polymer and a conductive allotrope of carbon. Preferably conductive matrix of the catalytic layer is selected from polythiophene derivatives, polypyrrole, polyaniline, carbon nanotubes, graphene and carbon powder. More preferably conductive matrix of the catalytic layer is poly(3,4-ethylenedioxythiophene) polystyrene sulfonate.

According to an embodiment, the biologic detection layer is a composite material comprising a biologic recognition element and an organic matrix. In particular, the organic matrix of the biologic detection layer is selected from a polymer and an allotrope of carbon, preferably organic matrix of the biologic detection is selected from polysaccharides derivatives such as chitosan derivatives or cellulose acetate derivatives, polyvinylpyridine derivatives, carbon nanotubes, graphene and carbon powder, more preferably organic matrix of the biologic detection layer is a chitosan derivative, in particular a partially deacetylated chitin. In a preferred embodiment, biologic recognition element is an enzyme, in particular Glucose oxidase or Lactate oxidase.

In a preferred embodiment, the biologic detection layer is in direct contact with the catalytic layer and may be on a part of the catalytic layer, i.e. biologic detection layer may not cover the whole surface of catalytic layer. In a more preferred embodiment, biologic detection layer is in direct contact with the catalytic layer, which is also in direct contact with gate electrode of OECT.

The function of biologic recognition element is to react with the biologic analyte of interest, thus producing an electrochemically active compound. The later may interact with noble metal nanoparticles as catalyst to be reduced, thus generating an electric charge finally detected by OECT.

In an advantageous embodiment illustrated in Figure 2, the organic electrochemical transistor of the invention comprises:
i. a substrate (1), preferably a polymeric substrate, more preferably a polyimide polymeric substrate,
ii. the source electrode (2) and the drain electrode (3), preferably source electrode (2) and drain electrode (3) are gold electrodes,
iii. the channel (4) connecting source electrode (2) and drain electrode (3), preferably channel (4) is a conductive polymer, more preferably channel (4) is poly(3,4-ethylenedioxythiophene) polystyrene sulfonate polymer (PEDOT:PSS),
iv. the gate electrode (5) located near the channel (4), preferably gate electrode (5) is a gold electrode,
v. the catalytic layer (6) in direct contact with the gate electrode (5) and comprising noble metal nanoparticles (7), preferably platinum nanoparticles grafted with thiophenol derivatives of formula (I) and an organic conductive matrix (8), preferably an organic conductive polymer, more preferably poly(3,4-ethylenedioxythiophene) polystyrene sulfonate polymer (PEDOT:PSS), and
vi. the biologic detection layer (9) in direct contact with the catalytic layer (6) and comprising a biologic recognition element, preferably an enzyme, more preferably Glucose Oxidase and an organic matrix, preferably a derivative of chitosan.

In the specific embodiment using Glucose oxidase as biologic recognition element and platinum nanoparticles in PEDOT:PSS as catalytic layer, Glucose oxidase reacts with glucose from sample and produces hydrogen peroxide H₂O₂. Hydrogen peroxide is oxidized in presence of platinum nanoparticles and reduces charge density in catalytic layer, yielding a variation of potential in gate electrode and a signal in OECT device. Alternatively, enzyme used as biologic recognition element is Lactate oxidase. Lactate oxidase reacts with lactate from sample and produces pyruvate and hydrogen peroxide H₂O₂. Hydrogen peroxide is then oxidized in presence of platinum nanoparticles and reduces charge density in catalytic layer, yielding a variation of potential in gate electrode and a signal in OECT device

According to an embodiment, the organic electrochemical transistor is totally or partially encapsulated in a membrane. This membrane may have several functions. Membrane may limit biofouling, thus improving biocompatibility and allowing for *in-vivo* use. Membrane may also selectively prevent diffusion of interferent species (large molecules, cells fragments, pollutants) towards OECT, thus improving sensibility, accuracy and/or time life of OECT. Membrane may also impose a difference in concentration of the biological analyte of interest between sample in contact with membrane and electrolyte in contact with biologic detection layer: such partition may improve accuracy of measurement or improve range of measurement of OECT.

The invention also relates to a method for detection of a biological analyte wherein a biological fluid is contacted with an organic electrochemical transistor as described above. Biological analytes of particular interest are glucose and lactate. The method may be implemented *in-vivo.* The method may be implemented as real-time monitoring.

### BRIEF DESCRIPTION OF THE DRAWINGS

**Figure 1** illustrates a schematic of a state of the art OECT, with equivalent electrical circuit. On a substrate (1) are disposed source electrode (2) and drain electrode (3), connected by a channel (4). A gate electrode (5) is located in the neighborhood of channel (4) and electrically connected to channel (4) through an electrolyte (not represented). A potential V_{DS} is imposed between drain and source. Another potential V_{GS} is imposed between gate and source.
**Figure 2** illustrates a schematic of the OECT according to the invention. A catalytic layer (6) comprising noble metal nanoparticles (7) in an organic conductive matrix (8) is in contact with gate electrode (5). A biologic detection layer (9) is in contact with catalytic layer (6) (exploded view for better understanding).

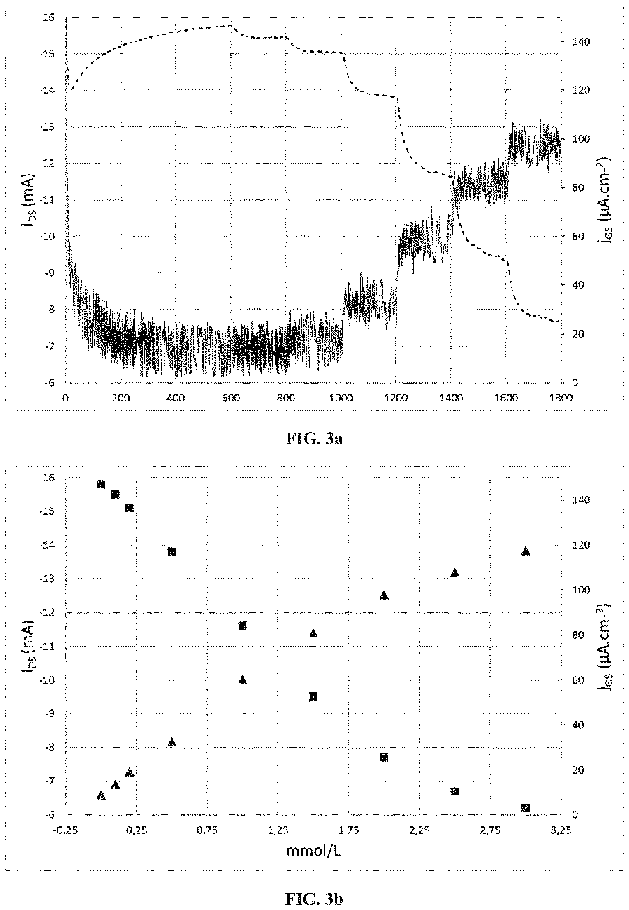

**Figure 3** shows results obtained in example 1. Figure 3a: Drain Source current I_{DS} (dotted line, in mA) and gate source current density j_{GS} (continuous line, in µA.cm⁻²) as a function of time (in seconds). Figure 3b: stationary values of I_{DS} (squares in mA) and j_{GS} (triangles in µA.cm⁻²) as a function of glucose concentration in sample (in mmol/L).

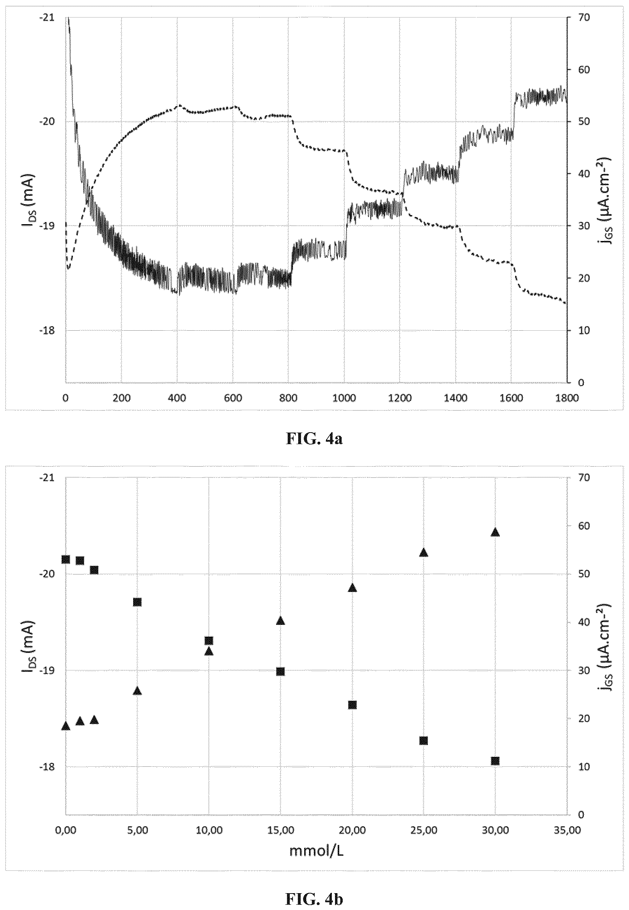

**Figure 4** shows results obtained in example 2. Figure 4a: Drain Source current I_{DS} (doted line, in mA) and gate source current density j_{GS} (continuous, line in µA.cm⁻²) as a function of time (in seconds). Figure 4b: stationary values of I_{DS} (squares in mA) and j_{GS} (triangles in µA.cm⁻²) as a function of glucose concentration in sample (in mmol/L).
**Figure 5** illustrates a schematic of a functionalized nanoparticle obtained by grafting of thiophenol derivative (I) on nanoparticle surface via a covalent bound. Typical diameter of nanoparticles is about 30 nm, while typical thickness of the thiophenol derivative crown is about 1 nm.

### EXAMPLES

The present invention is further illustrated by the following examples.

### Preparation of grafted platinum nanoparticles

### Synthesis of 4,4'-disulfanediylbis(N,N,N-trimethylbenzenamonium)

Under argon using Schlenk techniques, 4-aminophenyl disulfide (496 mg, from Aldrich) is dissolved in anhydrous DMF (10 mL) under stirring. N,N-diisopropylethylamine (2.04 mL, from Aldrich) and iodomethane (2.24 mL, from Aldrich) were added and the mixture was stirred for 48 h at room temperature. The solution was filtered, and the crude product was precipitated by adding dropwise the filtrate solution to 100 mL of vigorously stirred cold diethylether. The solution was filtered and the residual solid was purified by washing it twice with boiling acetone in a reflux apparatus for 45 min. The colorless powder was dried under high vacuum leading to the desired product (432 mg).

### Synthesis of platinum nanoparticles with a 4-(trimethylammonium)thiophenolate crown

A solution of Platinum(IV) chloride (387.3 mg, from Aldrich) dissolved in hexylamine (95 mL, from Acros Organics) was prepared (Solution A). A solution of sodium borohydride (349.9 mg, from Aldrich) in a mixture of 25 mL distilled water and 25 mL methanol (from VWR) was prepared and 25 mL hexylamine were added (Solution B). Immediately after preparation, the solution B is combined with the solution A (Solution C). After 20 s, a solution of 4,4'-disulfanediylbis(N,N,N-trimethylbenzenamonium) (425 mg) in a mixture of 25 mL of hexylamine, 25 mL of methanol and 15 mL of distilled water was added to the solution C. After 3 min 30 s, 110 mL of distilled water were added, and the mixture was stirred at room temperature for 10 min. The reaction mixture was then transferred into a separation funnel and 150 mL of distilled water were added. The aqueous phase was isolated and concentrated under reduced pressure. The nanoparticles were dispersed in 30 mL ethanol (from VWR) and 4,4'-disulfanediylbis(N,N,N-trimethylbenzenamonium) (426 mg) and 15 mL distilled water were added. The reaction mixture was stirred overnight at room temperature. The reaction mixture was then centrifugated at 7000 rpm for 20 min. The supernatant was removed, and the residual powder was redispersed in a mixture of 25 mL ethanol and 25 mL distilled water then centrifugated at 7000 rpm for 20 min twice. Finally, the powder was redispersed in absolute ethanol (from VWR) and centrifugated at 7000 rpm for 20 min. The clear supernatant was removed, and the black powder was left to dry in air overnight and then 3 h under high vacuum to obtain the platinum nanoparticles (344 mg).

Diameter of nanoparticles is determined to be 30 nm.

### Preparation of OECT-1

A substrate (1) of Kapton^{®} HN (general-purpose polyimide film supplied by DuPont) is cut to appropriate dimensions and cleaned by successive washing with acetone, water and isopropanol, then dried and heated for 60 minutes at 180°C.

A mask is prepared according to geometry of electrodes conceived and applied on substrate. Then Gold (Au) is deposited by vacuum deposition to form drain, source and gate electrodes. A 200 nm thick layer of Gold is obtained.

By ink-jetting Orgacon^{™} IJ-1005 ink (supplied by AGFA), a PEDOT:PSS layer is deposited on source electrode, drain electrode and between electrodes so as to form channel (3). A thermal treatment of 60 minutes at 120°C is applied to get conductive properties of PEDOT:PSS.

A mixture of 0.2 %wt platinum nanoparticles with a 4-(trimethylammonium)thiophenolate crown in PEDOT:PSS is prepared and ink-jetted on a part of gate electrode (2G), yielding a catalytic layer (5) of thickness 3 µm.

### Electrodeposition of biologic detection layer

A solution comprising 1.5 wt% Chitosan (75%-85% deacetylated natural chitin, medium molecular weight, MW 190 - 310 kDa, from Aldrich, CAS 9012-76-4) is prepared in 0.075 M HCl, under vigorous stirring. The resulting solution is filtered over a porosity 3 glass frit to remove any undissolved material. The pH of the solution is adjusted to 5.1 with NaOH 1.0 M. 5.0 mg/mL Glucose Oxidase (Glucose Oxidase type VII from Aspergillus Niger, ≥ 100 kU/g, MW 160 kDa, from Aldrich) are added to the Chitosan solution under gentle stirring, and 5.0 mL of the resulting mixture are transferred to a 4-way electrochemical cell, equipped with a 3-electrodes setup (working electrode : OECT gate, prepared as previously described ; counter electode : inox grid ; reference electrode : Saturated Calomel Electrode, Sat'd KCl) and a magnetic stirrer. 20.0 mmol/L H₂O₂ (H₂O₂ 30 wt% in H₂O, from Aldrich) are added to the electrochemical cell. The working electrode is polarized at E = - 0.40 V vs SCE, for 200 seconds, at room temperature and under stirring (400 rpm). The working electrode (OECT gate) is then rinsed with distilled water to remove any loosely bound material and stored in air until further use.

OECT-1 devices are thus obtained, as shown schematically on Figure 2.

### Preparation of OECT-C

A comparative OECT device is prepared with the same protocol as OECT-1, but a 0.2 %wt platinum nanoparticles with a 4-(trimethylammonium)thiophenolate crown in ethanol is used to prepare catalytic layer (5) on gate electrode (2G). The same amount of nanoparticle solution is deposited in OECT-C and in OECT-1.

### Preparation of OECT-2

On an OECT-1 device, an encapsulation membrane is further deposited.

A solution comprising 64.0 mg/mL poly-(4-vinylpyridine) (average Mw 160 kDa, from Aldrich) is prepared in a mixture of absolute ethanol and distilled water (90/10 v/v) (solution A). A solution comprising 64.0 mg/mL poly-(sodium 4-styrenesulfonate) (average Mw 1000 kDa, from Aldrich) is prepared in distilled water (solution B). A solution comprising 4.0 mg/mL poly(ethylene glycol) diglycidyl ether (PEGDE, average Mw 500 g/mol, from Aldrich) is prepared in a mixture of absolute ethanol and distilled water (80/20 v/v) (solution C). Solutions A and B are combined with a 90/10 v/v ratio (solution D). Solutions D and C are combined with an 80/20 v/v ratio (solution E). 35.5 µL/cm² of solution E are drop cast onto the channel and gate of the OECT. The resulting drop is left to dry at room temperature, and under an ethanol/water saturated atmosphere, for 18 to 24 h.

OECT-2 device is thus obtained.

### Mode of operation of OECT - Performances.

OECTs are connected to usual electric device for control of filed effect transistor.

### Example 1: OECT-1

V_{GS} and V_{DS} are set to +0.5V and -0.6V respectively.

A sample containing controlled concentration of glucose in Phosphate Buffer Solution (pH=7.4) is brought in contact with OECT-1. I_{DS} and j_{GS} are measured. Then sample is replaced with a sample more concentrated in glucose.

Figure 3a shows I_{DS} current and j_{GS} (current density) as a function of time, in an experiment in which glucose concentration is varied from 0 mmol/L (blank) to 2 mmol/L in phosphate buffer solution (0.01 M) at 310 K, by successive increments every 200 seconds. Time response is quick, lower than 30 seconds leading to stationary values of current associated with each increment of glucose concentration.

Figure 3b shows these stationary values of I_{DS} and j_{GS} as a function of glucose concentration. Currents linearly vary with glucose concentration, enabling to define sensibility of the OECT in said operating conditions. Actually, a linear fit defines *J_{GS}* = 10.14 + 45.75 [*Glucose*] and *I_{DS}* = -15.85 + 4.15 [*Glucose*] over range 0-2 mmol/L of glucose.

### Example 2: OECT 2

Setup of example 1 is reproduced, but using OECT-2 device and with following conditions.

Figure 4a shows I_{DS} current and j_{GS} (current density) as a function of time, in an experiment in which glucose concentration is varied from 0 mmol/L (blank) to 30 mmol/L in phosphate buffer solution (0.01 M) at 310 K, by successive increments every 200 seconds. Time response is quick, lower than 30 seconds leading to stationary values of current associated with each increment of glucose concentration.

Figure 4b shows these stationary values of I_{DS} and j_{GS} as a function of glucose concentration. Currents linearly vary with glucose concentration, enabling to define sensibility of the OECT in said operating conditions. Actually, a linear fit defines *J_{GS}* = 18.53 + 1.40 [*Glucose*] and *I_{DS}* = -20.13 + 0.07 [*Glucose*] over range 0-30 mmol/L of glucose.

### Example 3: Determination of Glucose concentration in a sample

A sample of unknown concentration of glucose is used.

OECT is configured in conditions of example 1, then sample is brought in contact with OECT. After few seconds, I_{DS} and j_{GS} becomes stationary. Using sensibility of OECT defined in example 1, real concentration of glucose in sample is determined.

## Claims

1. An organic electrochemical transistor comprising source and drain connected by a conductive channel, a gate electrode, a catalytic layer and a biologic detection layer, wherein the catalytic layer is a composite material comprising noble metal nanoparticles and a conductive matrix selected from an organic conductive polymer or a conductive allotrope of carbon,
wherein the catalytic layer is in direct contact with the gate electrode;
wherein the biologic detection layer is in direct contact with the catalytic layer;
wherein noble metal nanoparticles are grafted with thiophenol derivatives of formula (I): 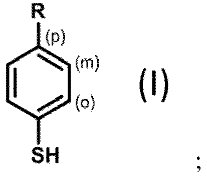 and
wherein R moiety of thiophenol derivatives is selected from:
• a charged moiety, preferably R moiety comprises a function selected from charged ternary amine, quaternary amine, sulfonate and phosphonate, more preferably thiophenol derivative is selected from 4- trimethylammonium thiophenol (IIa), 4-mercaptobenzenesulfonic acid (IIb), *N*-4-thiophenol- (2, 5 diamino) propenamide (IIc) and, 4- mercaptobenzenephosphonic acid (IId) 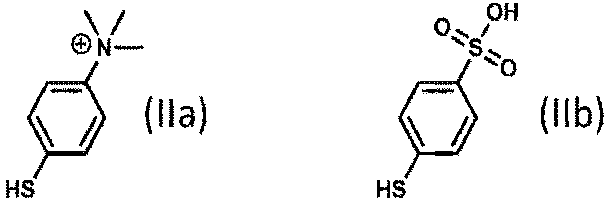 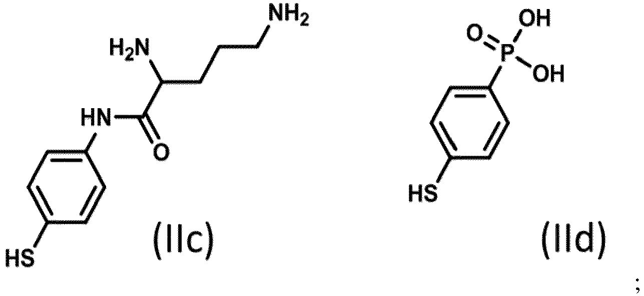 or
• a moiety comprising at least one aromatic group, preferably thiophenol derivative is selected from *N*-(4-mercaptophenyl)pyrene-1-carboxamide (IIIa) and 4-(tritylamino)benzenethiol (IIIb)

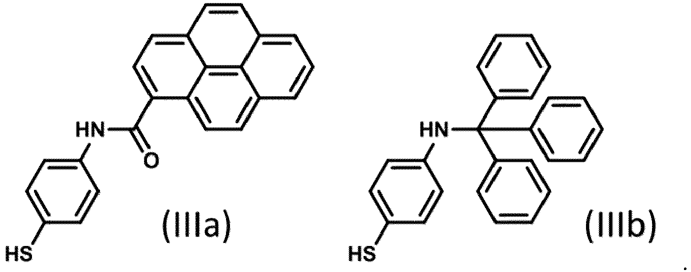

2. The organic electrochemical transistor according to claim **1,** wherein noble metal nanoparticles are platinum nanoparticles.

3. The organic electrochemical transistor according to any one of claims **1** to **2,** wherein the organic conductive polymer is selected from polythiophene derivatives, polypyrrole and polyaniline, preferably is poly(3,4-ethylenedioxythiophene) polystyrene sulfonate.

4. The organic electrochemical transistor according to any one of claims **1** to **2,** wherein the conductive allotrope of carbon is selected from carbon nanotubes, graphene and carbon powder.

5. The organic electrochemical transistor according to any one of claims **1** to **4,** wherein the biologic detection layer is a composite material comprising a biologic recognition element and an allotrope of carbon, preferably selected from carbon nanotubes, graphene and carbon powder.

6. The organic electrochemical transistor according to any one of claims **1** to **4,** wherein the biologic detection layer is a composite material comprising a biologic recognition element and a polymer, preferably selected from polysaccharides derivatives such as chitosan derivatives or cellulose acetate derivatives, and polyvinylpyridine derivatives, more preferably a chitosan derivative.

7. The organic electrochemical transistor according to any one of claim **5** to **6,** wherein the biologic recognition element is an enzyme, preferably Glucose oxidase or Lactate oxidase.

8. The organic electrochemical transistor according to any one of claims **1** to **7,** comprising:
i. a substrate (1),
ii. the source electrode (2) and the drain electrode (3) are gold electrodes,
iii. the conductive channel (4) connecting source electrode (2) and drain electrode (3), is a conductive polymer, preferably channel (4) is poly(3,4-ethylenedioxythiophene) polystyrene sulfonate polymer (PEDOT:PSS),
iv. the gate electrode (5) is a gold electrode,
v. the conductive polymer in the catalytic layer (6) is poly(3,4-ethylenedioxythiophene) polystyrene sulfonate polymer (PEDOT:PSS), and
vi. the biologic detection layer (9) in direct contact with the catalytic layer (6) and comprising a biologic recognition element, preferably an enzyme, more preferably Glucose oxidase or Lactate oxidase; and a polymer, preferably a derivative of chitosan.

9. The organic electrochemical transistor according to any one of claims **1** to **8,** wherein the organic electrochemical transistor is totally or partially encapsulated in a membrane.

10. Method for detection of a biological analyte wherein a biological fluid is contacted with an organic electrochemical transistor according to any one of claims **1** to **9.**

## Patentansprüche

1. Organischer elektrochemischer Transistor Source und Drain umfassend, die durch einen leitfähigen Kanal verbunden sind, eine Gateelektrode, eine katalytische Schicht und eine biologische Detektionsschicht, wobei die katalytische Schicht ein Verbundwerkstoff ist, der Edelmetall-Nanopartikel und eine leitfähige Matrix umfasst, die aus einem organischen leitfähigen Polymer oder einem leitfähigen Kohlenstoff-Allotrop ausgewählt wird,
wobei die katalytische Schicht in direktem Kontakt mit der Gateelektrode steht;
wobei die biologische Detektionsschicht in direktem Kontakt mit der katalytischen Schicht steht;
wobei die Edelmetall-Nanopartikel veredelt sind mit Thiophenol-Derivaten der Formel (I): 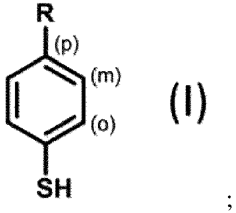 und
wobei der R-Anteil von Thiophenol-Derivaten ausgewählt wird aus:
• einem geladenen Anteil, vorzugsweise R-Anteil, der eine Funktion umfasst, ausgewählt aus geladenem ternärem Amin, quartärem Amin, Sulfonat und Phosphonat, noch bevorzugter ist Thiophenol-Derivat ausgewählt aus 4-Trimethylammoniumthiophenol (IIa), 4-Mercaptobenzolsulfonsäure (IIb), N-4-Thiophenol-(2,5-Diamino)Propenamid (IIc) und, 4-Mercaptobenzolphosphonsäure (IId) 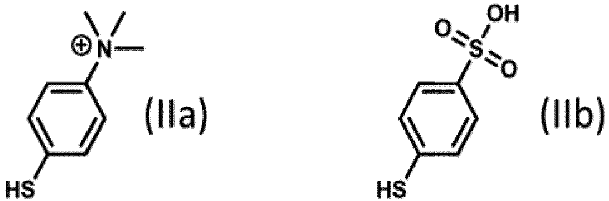 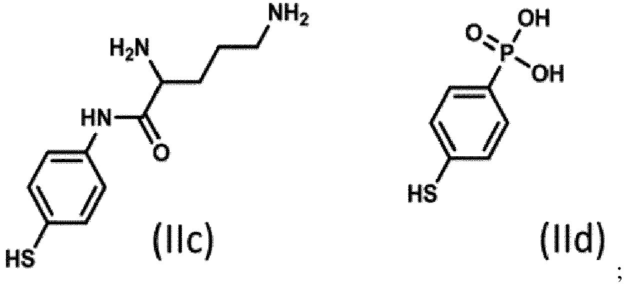 oder
• ein Anteil, der mindestens eine aromatische Gruppe umfasst, vorzugsweise Thiophenol-Derivat, das ausgewählt wird aus N-(4-Mercaptophenyl)Pyren-1-Carboxamid (IIIa) und 4-(Tritylamino)Benzolthiol (IIIb)

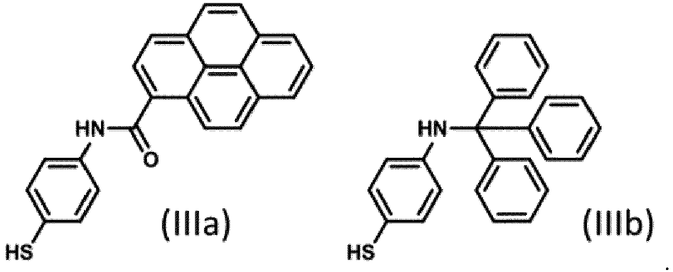

2. Organischer elektrochemischer Transistor nach Anspruch 1, wobei die Edelmetall-Nanopartikel Platin-Nanopartikel sind.

3. Organischer elektrochemischer Transistor nach einem der Ansprüche 1 bis 2, wobei das organische leitfähige Polymer ausgewählt wird aus Polythiophen-Derivaten, Polypyrrol und Polyanilin, vorzugsweise Poly(3,4-Ethylendioxythiophen) Polystyrolsulfonat.

4. Organischer elektrochemischer Transistor nach einem der Ansprüche 1 bis 2, wobei das leitfähige Kohlenstoff-Allotrop ausgewählt wird aus Kohlenstoffnanoröhren, Graphen und Kohlenstoffpulver.

5. Organischer elektrochemischer Transistor nach einem der Ansprüche 1 bis 4, wobei die biologische Detektionsschicht ein Verbundwerkstoff ist, der ein biologisches Erkennungselement und ein Kohlenstoff-Allotrop umfasst, vorzugsweise ausgewählt aus Kohlenstoffnanoröhren, Graphen und Kohlenstoffpulver.

6. Organischer elektrochemischer Transistor nach einem der Ansprüche 1 bis 4, wobei die biologische Detektionsschicht ein Verbundwerkstoff ist, der ein biologisches Erkennungselement und ein Polymer umfasst, vorzugsweise ausgewählt aus Polysaccharid-Derivaten wie Chitosan-Derivaten oder Celluloseacetat-Derivaten, und Polyvinylpyridin-Derivaten, noch bevorzugter einem Chitosan-Derivat.

7. Organischer elektrochemischer Transistor nach einem der Ansprüche 5 bis 6, wobei das biologische Erkennungselement ein Enzym ist, vorzugsweise Glucose-Oxidase oder Lactat-Oxidase.

8. Organischer elektrochemischer Transistor nach einem der Ansprüche 1 bis 7, umfassend:
i. ein Substrat (1),
ii. die Source-Elektrode (2) und die Drain-Elektrode (3) sind Goldelektroden,
iii. der leitfähige Kanal (4), der die Source-Elektrode (2) und die Drain-Elektrode (3) verbindet, ist ein leitfähiges Polymer, vorzugsweise ist der Kanal (4) Poly(3,4-Ethylendioxythiophen) Polystyrolsulfonatpolymer (PEDOT:PSS),
iv. die Gateelektrode (5) ist eine Goldelektrode,
v. das leitfähige Polymer in der katalytischen Schicht (6) ist Poly(3,4-Ethylendioxythiophen) Polystyrolsulfonatpolymer (PEDOT:PSS), und
vi. die biologische Detektionsschicht (9) ist in direktem Kontakt mit der katalytischen Schicht (6) und umfasst ein biologisches Erkennungselement, vorzugsweise ein Enzym, noch bevorzugter Glucose-Oxidase oder Lactat-Oxidase; und ein Polymer, vorzugsweise ein Derivat von Chitosan.

9. Organischer elektrochemischer Transistor nach einem der Ansprüche 1 bis 8, wobei der organische elektrochemische Transistor ganz oder teilweise in einer Membran eingekapselt ist.

10. Verfahren zur Detektion eines biologischen Analyten, wobei eine biologische Flüssigkeit mit einem organischen elektrochemischen Transistor nach einem der Ansprüche 1 bis 9 in Kontakt gebracht wird.

## Revendications

1. Transistor électrochimique organique comprenant une source et un drain connectés par un canal conducteur, une électrode de grille, une couche catalytique et une couche de détection biologique, dans lequel la couche catalytique est un matériau composite comprenant des nanoparticules de métaux nobles et une matrice conductrice choisie parmi un polymère conducteur organique ou un allotrope de carbone conducteur,
dans lequel la couche catalytique est en contact direct avec l'électrode de grille;
dans lequel la couche de détection biologique est en contact direct avec la couche catalytique;
dans lequel les nanoparticules de métaux nobles sont greffées avec des dérivés de thiophénol de formule (I): 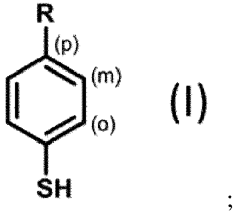 et
dans lequel le groupement **R** des dérivés du thiophénol est choisi parmi:
• un groupement chargé, de préférence le groupement **R** comprend une fonction choisie parmi une amine ternaire chargée, une amine quaternaire, un sulfonate et un phosphonate, plus préférentiellement le dérivé du thiophénol est choisi parmi le 4-triméthylammonium thiophénol (IIa), l'acide 4-mercaptobenzène sulfonique (IIb), le N-4-thiophénol (2,5-diamino) propénamide (IIc) et l'acide 4-mercaptobenzène phosphonique (IId) 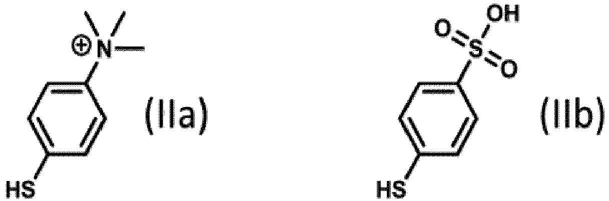 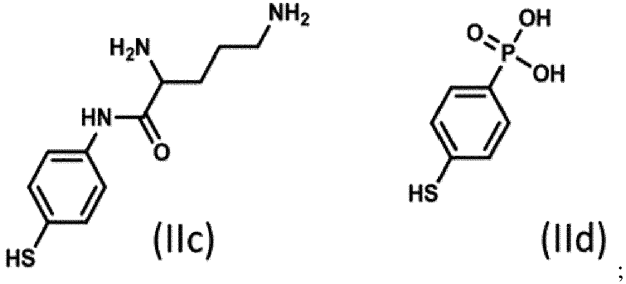 ou
• un groupement comprenant au moins un groupe aromatique, de préférence le dérivé du thiophénol est choisi parmi le N-(4-mercaptophényl)pyrène-1-carboxamide (IIIa) et le 4-(tritylamino)benzènethiol (IIIb)

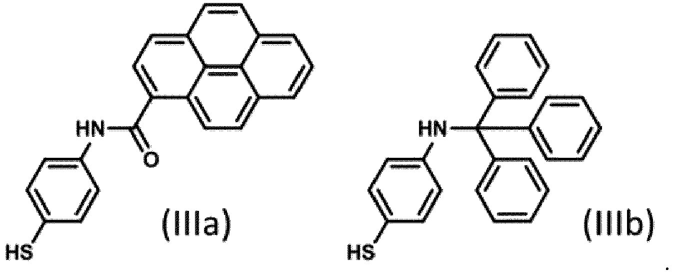

2. Le transistor électrochimique organique selon la revendication **1,** dans lequel les nanoparticules de métaux nobles sont des nanoparticules de platine.

3. Le transistor électrochimique organique selon l'une quelconque des revendications **1** à **2,** dans lequel le polymère conducteur organique est choisi parmi les dérivés de polythiophène, le polypyrrole et la polyaniline, de préférence le poly (3,4-éthylène dioxythiophène) polystyrène sulfonate.

4. Le transistor électrochimique organique selon l'une quelconque des revendications **1** à **2,** dans lequel l'allotrope de carbone conducteur est choisi parmi les nanotubes de carbone, le graphène et la poudre de carbone.

5. Le transistor électrochimique organique selon l'une quelconque des revendications **1** à **4,** dans lequel la couche de détection biologique est un matériau composite comprenant un élément de reconnaissance biologique et un allotrope de carbone, de préférence choisi parmi les nanotubes de carbone, le graphène et la poudre de carbone.

6. Le transistor électrochimique organique selon l'une quelconque des revendications **1** à **4,** dans lequel la couche de détection biologique est un matériau composite comprenant un élément de reconnaissance biologique et un polymère, de préférence choisi parmi les dérivés polysaccharidiques tels que des dérivés de chitosane ou d'acétate de cellulose, et des dérivés de polyvinylpyridine, plus préférentiellement un dérivé de chitosane.

7. Le transistor électrochimique organique selon l'une quelconque des revendications **5** à **6,** dans lequel l'élément de reconnaissance biologique est une enzyme, de préférence la glucose oxydase ou la lactate oxydase.

8. Le transistor électrochimique organique selon l'une quelconque des revendications **1** à **7,** comprenant :
i. un substrat (1),
ii. l'électrode de source (2) et l'électrode de drain (3) sont des électrodes en or,
iii. le canal conducteur (4) connectant l'électrode de source (2) et l'électrode de drain (3) est un polymère conducteur, de préférence le canal (4) est un polymère poly(3,4-éthylènedioxythiophène)polystyrène sulfonate (PEDOT: PSS),
iv. l'électrode de grille (5) est une électrode en or,
v. le polymère conducteur dans la couche catalytique (6) est un polymère de poly(3,4-éthylène dioxythiophène) polystyrène sulfonate (PEDOT:PSS), et
vi. la couche de détection biologique (9) est en contact direct avec la couche catalytique (6) et comprend un élément de reconnaissance biologique, de préférence une enzyme, plus préférentiellement la glucose oxydase ou la lactate oxydase; et un polymère, de préférence un dérivé du chitosane.

9. Le transistor électrochimique organique selon l'une quelconque des revendications **1** à **8,** dans lequel le transistor électrochimique organique est totalement ou partiellement encapsulé dans une membrane.

10. Procédé de détection d'un analyte biologique, dans lequel un liquide biologique est mis en contact avec un transistor électrochimique organique selon l'une quelconque des revendications **1** à **9.**
